# EUROPÄISCHE PATENTANMELDUNG

(11) **EP 1 536 187 A2**
(43) Veröffentlichungstag der Anmeldung: **01.06.2005**
(21) Anmeldenummer: 04024632.4
(22) Anmeldetag: 15.10.2004
(51) Int. Cl.: F24F 12/00

(54) **Wärmetauscher mit Feuchterückkühlung**

(30) Priorität: 26.11.2003 DE 10355841
(71) Anmelder: Erwin Müller GmbH, 49808 Lingen (DE)
(72) Erfinder: Holtz, Hans-Joachim, 68259 Mannheim (DE)
(74) Vertreter: Engelmann, Kristiana, Dipl.-Ing.

(57) **Zusammenfassung**

Die Erfindung bezieht sich auf ein Wärmetauscher-Modul (1) zur Rückgewinnung von Wärme aus einer Abluftströmung (26) und Übertragung der Wärme an eine Frischluftströmung (27). Dem Wärmetauscher-Modul (1) ist eine Kondensatauffangeinrichtung (7) zugeordnet. Das Wärmetauscher-Modul (1) wird von der Abluftströmung (26) und der Frischluftströmung (27) gemäß des Kreuzgegenstromprinzipes durchströmt, wobei die erwärmte Frischluftströmung (27) über die Kondensatauffangvorrichtung (7) geführt wird und über diese befeuchtet wird.

## Beschreibung

### Technisches Gebiet

Wärmetauscher kommen in der Technik im Bereich der Wärmerückgewinnung zum Einsatz und können außer in Industrieanlagen auch in Gebäuden eingesetzt werden. Gebäude werden in der Regel gemäß des zentralen Lüftungskonzeptes oder des dezentralen Lüftungskonzeptes be- und/oder entlüftet. Wärmetauscher werden hier eingesetzt, um die bei niedrigen Außentemperaturen von außen in das Gebäude geförderte Luft durch Nutzung der in der Abluft enthaltenen Wärme, die in der Regel der Raumlufttemperatur entspricht, vorzuwärmen und so Energie einzusparen. Aufgrund der unterschiedlichen Temperaturen von Frischluft und Abluft entsteht in Wärmetauschern Kondensat, welches abhängig vom thermischen Wirkungsgrad des Wärmetauschers in einer Kondensatauffangeinrichtung aufgefangen wird.

### Stand der Technik

Aus DE 30 30 536 A1 ist ein Brüstungselement zum Einbau in Fassaden bekannt. Dieses wird insbesondere unterhalb von oder in Verbindung mit Fenstern mit einem Tragrahmen sowie Einrichtungen zur Luftführung und Wärmegewinnung eingesetzt. Auf der Innenseite sind einer einen schachtartigen wärmeisolierten Luftführungskanal umschließenden Brüstungswandung ein Wärmeabgabeelement im Bereich des Kanalaustrittes sowie auf der Außenseite der Brüstungswandung ein nach außen vorspringender umschlossener Raum zugeordnet. Der nach außen vorspringende, umschlossene Raum ist von schall- und wärmeisolierenden Begrenzungswandungen umschlossen und nimmt eine Wärmepumpe sowie einen Wärmetauscher auf. Die Wärmepumpe ist mit dem Wärmeabgabeelement und mit auf der Außenseite der Begrenzungswandungen angeordneten Wärmeaufnahmeelementen verbunden sowie zur äußeren Kühlung an eine mit einem Gebläse ausgerüstete Luftführungsleitung angeschlossen. Diese führt zu dem Wärmeaustauscher und von dort weiter zu einer Abluftsammelkammer. Der Wärmetauscher weist Zuströmöffnungen für die Zuluft auf und ist auf der Austrittsseite der Zuluft an den Luftführungskanal der Brüstungswandung angeschlossen.

Aus DE 30 30 536 A1 geht hervor, dass unterhalb des Wärmetauschers eine Kondensatwanne aufgenommen ist. Der Wärmetauscher wird gemäß dem Gegenstromprinzipes von Außenluft und aus dem Gebäude zu transportierende Abluft durchströmt. In die Kondensatwanne ist ein saugfähiges Aufnahmeelement zur Aufnahme des aus dem Wärmetauscher an der Unterseite abtropfenden Kondensates eingelegt. Die Ausbildung der Kammern, durch welche die aus dem Gebäude zu fördernde Abluft und die das Gebäude zu fördernde Zuluft durchströmt werden, gehen aus DE 30 30 536 A1 nicht näher hervor. Die Frischluftströmung ist so geleitet, dass die erwärmte Zuluft über das das Kondensat aufnehmende Vliesmaterial in der Kondensatwanne geführt wird und dieses aufnimmt. Die Abmessungen des aus DE 30 30 536 A1 bekannten Wärmetauschers, der nach dem Gegenstromprinzip arbeitet, sind verhältnismäßig gering und durch die Länge des Wärmetauschers im Wesentlichen bestimmt, welcher den erforderlichen Wärmeübergang bewirkt.

Aus dem Firmenprospekt "Luftbefeuchtungssysteme, Anforderungen und Lösungen" der Firma Klingenburg GmbH, Boystraße 115 in D-45968 Gladbeck sind Gegenstrom-Plattenwärmeraustauscher sowie Kreuzstrom-Plattenwärmeraustauscher bekannt. Diese werden in unterschiedlichen Größen angeboten und dienen der vollständigen Trennung von Abluft und Zuluft, sind als Module fest vorgegebener Größen ausgebildet, hochfest und druckstabil ausgeführt. Bei den aus dem Firmenprospekt der Firma Klingenburg bekannten Wärmeaustauschern, sei es die nach dem Gegenstromprinzip, seien es die nach dem Kreuzstromprinzip arbeitenden Wärmeaustauscher, handelt es sich um Module, bei denen sich aufgrund der einander passierenden Luftströme Kondensat ansammelt. Das Kondensat sammelt sich aufgrund der Schwerkraft an einer Bodenfläche der Plattenwärmertauscher an und bildet dort einen Sumpf, welcher einen Nährboden für Bakterien bzw. Pilze bietet. Im ungünstigsten Falle wird die einem zu belüftenden Raum eines Gebäudes zugeführte Zuluft, durch die in diesen Plattenwärmetauschern sich bildenden Pilz- bzw. Bakterienkulturen kontaminiert und in den zu belüftenden Raum eines Gebäudes eingeblasen. Dies stellt eine technische Unzulänglichkeit dar, welche im Allgemeinen im Zusammenhang mit Klimaanlagen und Belüftungssystemen häufig auftritt.

### Darstellung der Erfindung

Durch die erfindungsgemäß vorgeschlagene Lösung wird ein Wärmetauscher bereitgestellt, der modular aufgebaut ist. Unter modularem Aufbau wird nachfolgend verstanden, dass der vorgeschlagene Wärmetauscher in Strömungsrichtung der Frischluft bzw. in Strömungsrichtung des Abluftstromes je nach Einbausituation und abhängig vom gewünschten Wirkungsgrad ηₜₕ in verschiedenen Breiten ausgebildet werden kann. Dazu sind die einzelnen stegförmig ausgebildeten Frischluft- bzw. Abluftführungskanäle nebeneinander liegend angeordnet. Die einzelnen Frischluft- und Abluftkanäle werden durch ein den Wärmeübergang ermöglichendes extrem dünnwandig ausgebildetes Blech voneinander getrennt. Die dünnwandigen Bleche, deren Wandstärke unterhalb von 1 mm liegt, können aus Aluminium, aus Kupfer, aus einem gute Wärmeübertragungseigenschaften aufweisenden Kunststoffmaterial oder auch aus extrem dünnwandiger Keramik hergestellt werden.

Der vorgeschlagene Wärmetauscher weist mehrere von der Außenseite zugängliche Durchsteckelemente auf, die beispielsweise als Bolzen oder als Schrauben ausgebildet sein können. Die Außenseiten des vorgeschlagenen Wärmetauschers werden durch etwas dickwandigere Bleche gebildet. Je nach Einbausituation können einzelne, die Frischluftkanäle bzw. die Abluftkanäle bildende Bleche von den Befestigungselementen abgenommen werden, so dass ein in Strömungsrichtung von Frischluft bzw. in Strömungsrichtung von Abluft gesehen schmaler oder breiter bauender Wärmetauscher bereitgestellt werden kann. Je nach zu Verfügung stehendem Einbauraum kann der erfindungsgemäß vorgeschlagene Wärmetauscher im Extremfall lediglich einen Frischluftkanal und einen Abluftkanal sowie beliebig Vielfache davon aufweisen. Zur Breitenanpassung des vorgeschlagenen Wärmetauschers können dann je nach Einbausituation länger oder kürzer ausgebildete Befestigungs- bzw. Durchsteckelemente eingesetzt werden.

Der vorgeschlagene Wärmetauscher arbeitet nach dem Kreuzgegenstromprinzip, d.h. die in die jeweiligen Abluftkanäle eintretende Raumluft sowie die in die jeweiligen Frischluftkanäle eintretende Frischluft kreuzen einander. Das Kreuzgegenstromprinzip zeichnet sich durch einen guten thermischen Wirkungsgrad ηₜₕ aus; die Kanäle sind voneinander getrennt, so dass keine Luftvermischung stattfindet und eine indirekte Wärmeübertragung gewährleistet ist.

In vorteilhafter Weise ist am erfindungsgemäß vorgeschlagenen, modular ausgebildeten Kreuzgegenstromwärmertauscher eine indirekte Feuchterückkühlung verwirklicht. Dazu wird bei Einbau des erfindungsgemäß vorgeschlagenen Wärmetauschers an dessen Unterseite eine wannenförmig ausbildbare Kondensatauffangvorrichtung vorgesehen. Die wannenförmig ausgebildete Kondensatauffangeinrichtung nimmt einerseits das bei Abkühlung der relativ warmen Abluft entstehende Kondensat auf und gibt dies an die erwärmte und aufgrund dessen eine hohe Wärmeaufnahmekapazität aufweisende Frischluft ab. Auf diese Weise wird erreicht, dass das durch Abkühlung der Raumluft entstehende Kondensat unmittelbar wieder durch die in den vorgeschlagenen Wärmetauscher eintretende Frischluft aufgenommen wird. Dadurch können die Entleerungsintervalle der Kondensatauffangvorrichtung erheblich verlängert werden.

Der modular ausgebildete Wärmetauscher bietet darüber hinaus den Vorteil, dass er an unterschiedlichsten Einbauorten eingesetzt werden kann. In vorteilhafter Weise werden die jeweils paarweise nebeneinander liegenden Frischluftkanäle und die Abluftkanäle von Luftströmungen von der Abluft- bzw. der Frischluftströmung durchströmt, die über Sauggebläse erzeugt werden. Aufgrund der dem vorgeschlagenen Wärmetauscher zugeordneten Sauggebläse wird die Luftströmung erzwungen, so dass sich etwa bei einem Luftfördervolumen von zum Beispiel 120 m³/h ein sehr guter thermischer Wirkungsgrad einstellt. Anstelle von Sauggebläse können auch Gebläse eingesetzt werden.

Die einzelnen Kanäle des vorgeschlagenen Wärmetauschers können durch eine Verrippung der zum Wärmeaustausch dienenden extrem dünnwandigen Aluminium- bzw. Kupfer- bzw. Keramikplättchen versteift werden, so dass selbst bei hohen Strömungsgeschwindigkeiten im Wärmetauscher ein Flattern oder eine auf andere Weise hervorgerufene Geräuschentwicklung unterbleibt. Neben Aluminiumblechen einer Wandstärke von etwa 0,5 mm, dünnwandigen Keramikwänden und dünnwandigen Kupferwänden kann auch gute Wärmeübertragungseigenschaften aufweisendes Kunststoffmaterial zur Trennung der Luftführungskanäle der Frischluft und Abluft eingesetzt werden. Im Prinzip lassen sich die Trennwände zwischen den Luftführungskanälen aus jedwedem gutleitenden Energie übertragenden Material herstellen.

### Zeichnung

Anhand der Zeichnung wird die Erfindung nachstehend eingehender beschrieben.

Es zeigt:
- Figur 1: die Frischluft- und die Abfluftführung im Wärmetauscher-Modul,
- Figur 2: die Abluftführung durch einen aufgeschnitten dargestellten Kanal des Wärmetauscher-Moduls,
- Figur 3: die Frischluftführung durch einen aufgeschnitten dargestellten stegförmigen Kanal des Wärmetauschers,
- Figuren 4.1, 4.2, und 4.3: Ansichten eines ersten Trennelementes der stegförmigen Kanäle,
- Figuren 5.1, 5.2 und 5.3: zweite Trennelemente der stegförmig ausgebildeten Kanäle,
- Figur 6: eine perspektivisch wiedergegebene Ansicht des ersten Trennelementes und
- Figur 7: eine Ausführungsvariante des Wärmetauscher-Moduls in der Draufsicht.

### Ausführungsvarianten

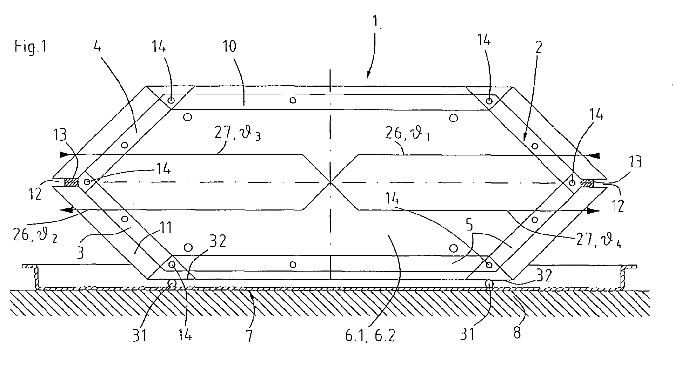

Der Darstellung gemäß Figur 1 ist in schematischer Weise die Frischluft- und die Abluftführung im erfindungsgemäß vorgeschlagenen Wärmetauscher-Modul zu entnehmen.

In Figur 1 ist ein Wärmetauscher-Modul 1 dargestellt, welches mehrere nebeneinander liegende Eintrittsöffnungen 2 für eine Abluftströmung 26 aufweist. Die Abluftströmung 26 tritt mit einer Temperatur ϑ₁ in das Wärmetauscher-Modul 1 ein und verlässt dieses an einer Austrittsöffnung 3 mit einer Temperatur ϑ₂. Die Austrittstemperatur ϑ₂ der Abluftströmung 26 liegt unterhalb der Eintrittstemperatur u₁ der Abluftströmung 26. Die Eintrittstemperatur ϑ₁ der Abluftströmung 26 entspricht im Wesentlichen der Temperatur des Raumes, aus dem die Abluftströmung 26 - etwa durch ein Gebläse - abgezogen wird. An einer Eintrittsöffnung 4 strömt eine Frischluftströmung 27 in das Wärmetauscher-Modul 1 für Luft/Luft-Betrieb ein und verlässt diesen an einer Austrittsöffnung 5. Die Eintrittstemperatur der Frischluftströmung 27, ϑ₃ entspricht der Lufttemperatur, mit welcher beispielsweise Außenluft aus dem Freien über ein in Figur 1 nicht dargestelltes Gebläse angesaugt wird. Nach Passage des Wärmetauscher-Moduls 1 hat die Frischluftströmung 27 eine Austrittstemperatur ϑ₄, die höher liegt als die Eintrittstemperatur ϑ₃ der von außen angesaugten Frischluftströmung 27.

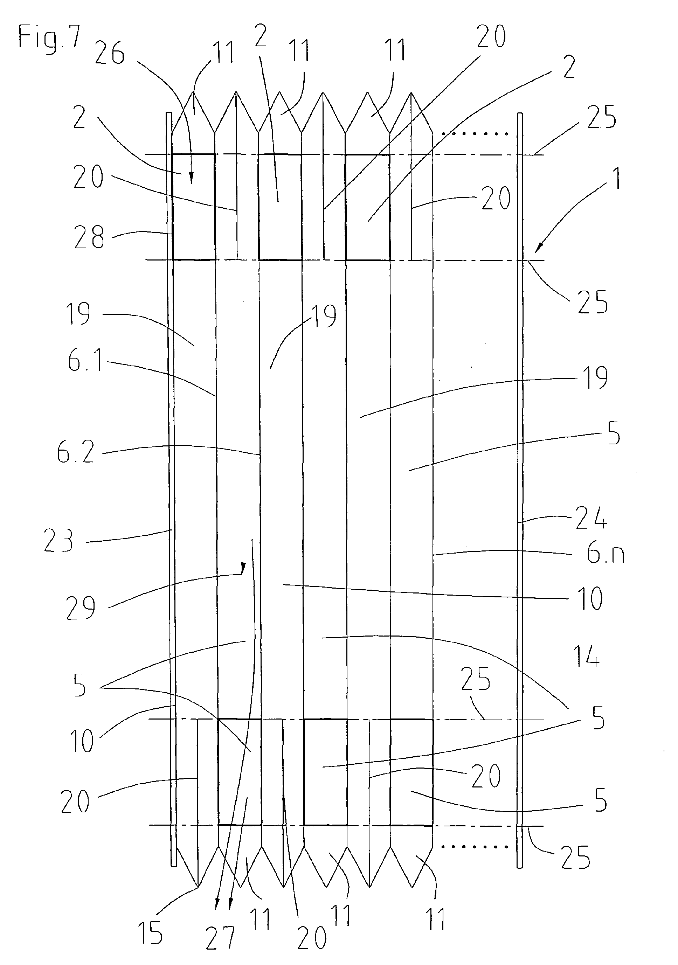

Innerhalb des Wärmetauscher-Moduls 1 kreuzen sich die Abluftströmung 26 und die Frischluftströmung 27. Das Wärmetauscher-Modul 1 arbeitet nach dem Kreuzgegenstromprinzip, wobei die Abluftströmung 26 von ihrer Eintrittstemperatur ϑ₁ auf ihre Austrittstemperatur ϑ₂ abgekühlt wird und die Frischluftströmung 27 dementsprechend von ihrer Eintrittstemperatur ϑ₃ auf ihre Austrittstemperatur ϑ₄ erwärmt wird. Der Wärmeübergang zwischen voneinander getrennten Abluftkanälen 28 und Frischluftkanäle 29 (vgl. Darstellung gemäß Figur 7) erfolgt durch dünnwandig ausgebildete Trennwände 6.1, 6.2, durch die die Abluftkanäle und die Frischluftkanäle voneinander getrennt sind.

Unterhalb des Wärmetauscher-Moduls 1 für Luft/Luft-Betrieb ist eine Kondensatauffangvorrichtung 7 aufgenommen, in welcher das bei der Abkühlung der Abluftströmung 26 entstehende Kondenswasser aufgefangen wird. Die Kondensatauffangvorrichtung 7 kann beispielsweise wannenförmig ausgebildet werden und mit einem saugfähigen Auslegematerial 8, wie zum Beispiel einem anorganischen Vlies oder dergleichen ausgelegt sein. Am Boden der beispielsweise wannenförmig ausgebildeten Kondensatauffangvorrichtung 7 kann optional ein Kondensatablauf 9 vorgesehen sein, über welchen bei erschöpfter Wasseraufnahmekapazität des Auslegemateriales 8, überschüssiges Kondensat ablaufen kann, ohne dass ein manueller Eingriff erforderlich ist.

Die einzelnen Abluftkanäle bzw. Frischluftkanäle werden durch die dünnwandig ausgebildeten Trennwände 6.1, 6.2 voneinander getrennt. Die Trennwände 6.1, 6.2 können zum Beispiel aus Aluminium, Kupfer, Keramik oder auch aus einem gute Wärmeübertragungseigenschaften aufweisenden Kunststoffmaterial gefertigt werden. Die Abluftkanäle und die Frischluftkanäle, welche in der Zeichenebene der Figur 1 nicht näher dargestellt sind, werden jeweils durch Verschlussrippen 10, 11 nach außen abgedichtet, wobei die Anordnung einer ersten Verschlussrippe 10 und einer zweiten Verschlussrippe 11 jeweils wechselweise erfolgt, so dass pro Abluftkanal bzw. pro Frischluftkanal jeweils eine Eintrittsöffnung 2 in Bezug auf die Abluftund jeweils eine Eintrittsöffnung 4 sowie eine Austrittsöffnung 5 in Bezug auf die Frischluftströmung 27 entsteht.

Zur Vermeidung einer Luftvermischung des in Luft/Luft-Betrieb arbeitenden Wärmetauschermoduls 1 sind zwischen der Oberseite der Kondensatauffangvorrichtung, d.h. die in diese einlegbaren Auslegematerial 8 und der Unterseite des Wärmetauschermoduls 1 Dichtleisten 31 angeordnet. Die Dichtleisten 31 können wie in Figur 1 angedeutet, von kreisförmigem Querschnitt beschaffen sein, diese könnten jedoch ebenso gut dreieckförmig, viereckförmig, quadratisch, rechteckförmig oder in einer beliebigen anderen Geometrie ausgebildet sein. Die senkrecht zur Zeichenebene gemäß Figur 1 verlaufenden Dichtleisten 31 liegen an Anlageflächen 32 an der Unterseite des Wärmetauscher-Moduls 1 an und verhindern eine Vermischung der Luftströmungen 6 und 27 miteinander, was den thermischen Wirkungsgrad ηₜₕ des vorgeschlagenen Wärmertauscher-Moduls 1 negativ beeinflussen würde.

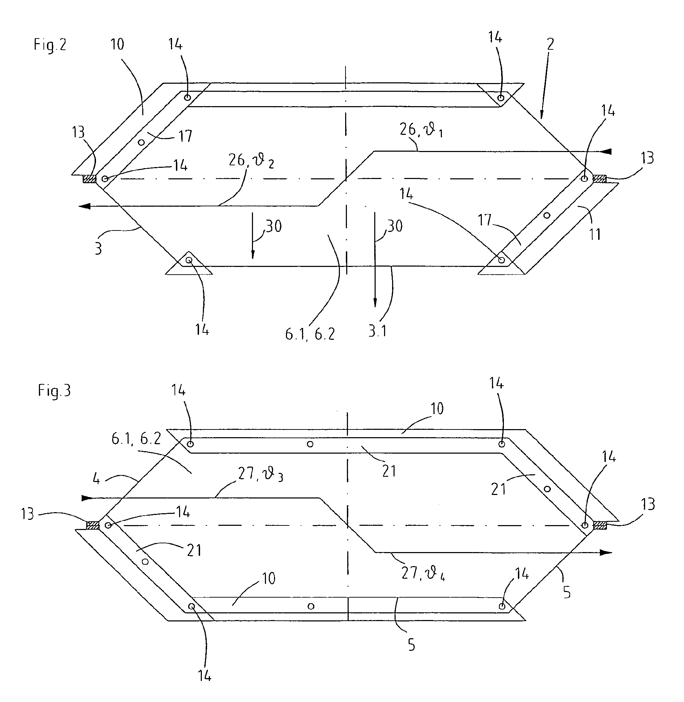

Figur 2 ist die Abluftführung durch einen stegförmig ausgebildeten Kanal des Wärmetauscher-Moduls gemäß Figur 1 zu entnehmen.

Der in Figur 2 in der Seitenansicht dargestellte Abluftkanal wird von der Abluftströmung 26 passiert, welche an der Eintrittsöffnung 2 eintritt und den Abluftkanal an der Austrittsöffnung 3 wieder verlässt. Von den durch die Trennwände 6.1 bzw. 6.2 gegebenen Kanalbegrenzungen ist in der Darstellung gemäß Figur 2 lediglich eine Trennwand 6.1 dargestellt. An den in Figur 2 dargestellten Trennwand 6.1, 6.2 befinden sich einander gegenüberliegend zwei zweite Verschlussrippen 11, die mit jeweils einer Seite an einer sich in die Zeichenebene erstreckende Rippe 13 anliegen und an diese ausgerichtet werden. Sowohl die Trennwände 6.1, 6.2 als auch die zweiten Verschlussrippen 11 weisen jeweils Durchgangsbohrungen 14 auf, über welche das Wärmetauscher-Modul 1 zusammengehalten wird. Über die erste Verschlussrippe 10 und die zweite Verschlussrippe 11 werden sowohl die Eintrittsöffnungen 2 für die Abluftströmung 26 als auch die Austrittsöffnung 3 für die Abluftströmung 26 definiert. Die Abluftströmung 26 verlässt demnach den in Figur 2 in Seitenansicht dargestellten stegförmig ausgebildeten Kanal über die seitlich ausgebildete Austrittsöffnung 3 und über die an der Unterseite des Wärmetauscher-Moduls 1 ausgebildete Austrittsöffnung 3 und kühlt sich dabei von ihrer Eintrittstemperatur ϑ₁ auf ihre Austrittstemperatur ϑ₂ ab. Das dabei entstehende Kondensat tropft in die in Figur 2 nicht dargestellte Kondensatauffangvorrichtung 7 ab, angedeutet durch die mit Bezugszeichen 30 identifizierten Pfeile, welche die Abtropfrichtung des Kondensates andeuten.

Der Darstellung gemäß Figur 3 ist entnehmbar, dass die Frischluftströmung 27 einen den Abluftkanal benachbarten stegförmig ausgebildeten Kanal durchströmt und an der Eintrittsöffnung 4 in diesen Kanal eintritt und diesen Kanal an der Austrittsöffnung 5, die seitlich an der Begrenzungswand 6.1, 6.2 angebracht ist und an der an der Unterseite befindlichen Austrittsöffnung 5 wieder verlässt. Dabei erwärmt sich die Frischluftströmung 27 von ihrer Eintrittstemperatur ϑ₃ auf ihre Austrittstemperatur ϑ₄. Der in Figur 3 teilweise dargestellte Frischluftkanal ist durch die erste Verschlussrippe 10 und die zweite Verschlussrippe 11 definiert, und vom in Figur 2 dargestellten Abluftkanal durch die Trennwand 6.1, 6.2 getrennt. Über diese Trennwand 6.1, 6.2 werden der in Figur 2 dargestellte Abluftkanal und der in Figur 3 dargestellte Frischluftkanal voneinander getrennt, wobei diese im Wärmetauscher-Modul 1 nebeneinander liegenden Kanäle gemäß des Kreuzgegenstromprinzipes durchströmt werden, was einen guten Wärmeübergang über die dünnwandig ausgebildeten Trennwände 6.1, 6.2 bewirkt.

Über die gemäß Figur 1 an der Unterseite des Wärmetauscher-Moduls 1 angeordnete Kondensatauffangvorrichtung 7 ist sichergestellt, dass das bei der Abkühlung der Abluftströmung 26 von ihrer Eintrittstemperatur ϑ₁ auf ihre Austrittstemperatur ϑ₂ anfallende Kondensat an der Unterseite einer Öffnung 3.1 für Kondensat für die Abluftströmung 26 aufgefangen wird. Gleichzeitig passiert der von seiner Eintrittstemperatur ϑ₃ auf seine Austrittstemperatur ϑ₄ innerhalb des Wärmetauscher-Moduls erwärmte Frischluftstrom 27 ebenfalls die Oberseite der Kondensatauffangvorrichtung 7, so dass die erwärmte Luft, die aufgrund ihrer Erwärmung eine hohe Feuchteaufnahmekapazität aufweist und durch das Kondensat während der Passage der lang gestreckt ausgebildeten Kondensatauffangvorrichtung 7 wieder befeuchtet wird. Durch die erfindungsgemäß vorgeschlagene Ausbildung des Wärmetauscher-Moduls 1 ist demnach ein Feuchtigkeitskreislauf gewährleistet, so dass der Kondensateintrag durch Abkühlung der Abluftströmung 26 in die Kondensatauffangvorrichtung 7 durch Rückbefeuchtung der Frischluftströmung 27 bei Passage derselben Kondensatauffangvorrichtung 7 zumindest teilweise wieder ausgeglichen wird. Dadurch lassen sich einerseits die Entleerungsintervalle der Kondensatauffangvorrichtung 7 verlängern, sowie die Auswechselintervalle für ein optional in der wannenförmig ausgebildeten Kondensatauffangvorrichtung angeordnetes anorganisches Material 8 zeitlich strecken. Optional kann an der in Figur 1 in schematischer Ansicht wiedergegebenen Kondensatauffangvorrichtung 7 auch ein Ablauf 9 ausgebildet werden, über welchen überschüssiges Kondensat bei erschöpfter Aufnahmekapazität des Auslegemateriales 8 abströmen kann.

Der Figurensequenz 4.1 bis 4.3 sind Ansichten der zweiten Verschlussrippen zu entnehmen.

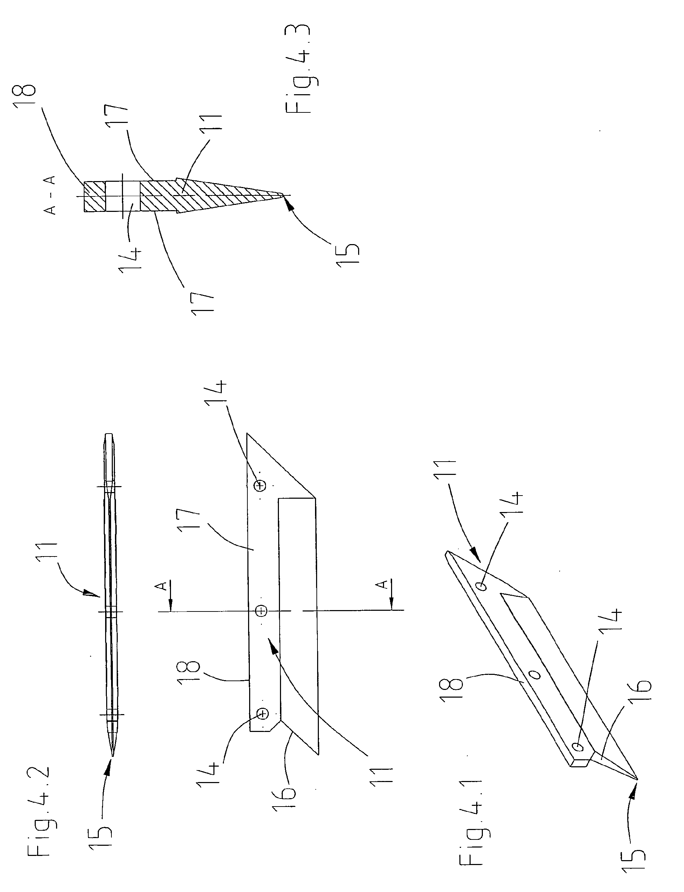

Gemäß der perspektivischen Darstellung gemäß Figur 4.1 umfasst die zweite Verschlussrippe 11 eine Schließfläche 18, sowie eine Anlagefläche 16 an welcher die zweite Verschlussrippe 11 durch die in Figur 1 dargestellte Rippe 13 am Wärmetauscher-Modul 1 ausgerichtet wird. Ebenso wie die Trennwände 6.1, 6.2, durch welchen die Abluftkanäle von den Frischluftkanälen des Wärmetauscher-Moduls 1 getrennt werden, ist die zweite Verschlussrippe 11 mit als Bohrungen ausgebildeten Befestigungsöffnungen versehen, vergleiche Bezugszeichen 14. Darüber hinaus kann die zweite Verschlussrippe 11 ein spitz zulaufendes Ende 15 aufweisen, welches zur Brechung des Luftstromes und zu dessen Aufteilung in einzelne die Kanäle durchströmende Frischluft- und Abluftströme dient.

Figur 4.2 zeigt die zweite Verschlussrippe 11 in der Seitenansicht. In der Fläche der zweiten Verschlussrippe 11 sind in Figur 4.3 ebenfalls dargestellte Anlageflächen 17 ausgebildet. Die Tiefe dieser Anlageflächen 17 in Bezug auf die Materialstärke der zweiten Verschlussrippe 11 ist so bemessen, dass die Trennwände 6.1, 6.2, durch welche die Frischluft- und die Abluftkanäle voneinander getrennt werden, in den Anlageflächen 17 liegen und die Trennwände 6.1, 6.2 mit dem verbleibenden Material der zweiten Verschlussrippe 11 eine ebene Oberfläche bilden. Die Trennwände 6.1, 6.2 können ihrerseits durch eine Verrippung oder eine andere versteifende Profilierung gegen Rationen bei hohen Strömungsgeschwindigkeiten gesichert werden, so dass vom erfindungsgemäß vorgeschlagenen Wärmetauscher-Modul 1 im Betrieb keine Geräusche ausgehen.

Figur 4.3 zeigt den Schnittverlauf A-A gemäß Figur 4.2, wonach die beidseits der zweiten Verschlussrippe 11 angebrachten Anlageflächen 17 in einer der Stärke der Trennwände 6.1, 6.2 entsprechenden Tiefe ausgebildet werden können. Mit Bezugszeichen 14 ist eine der Befestigungsöffnungen der zweiten Verschlussrippe 11 näher bezeichnet. Die in Figuren 4.1, 4.2 und 4.3 dargestellten zweiten Verschlussrippen 11 werden aus einem Kunststoffmaterial hergestellt und dienen der Begrenzung der im Wärmetauscher-Modul 1 nebeneinander liegend angeordneten Abluft- bzw. Frischluftkanäle (vgl. Darstellung gemäß Figur 7).

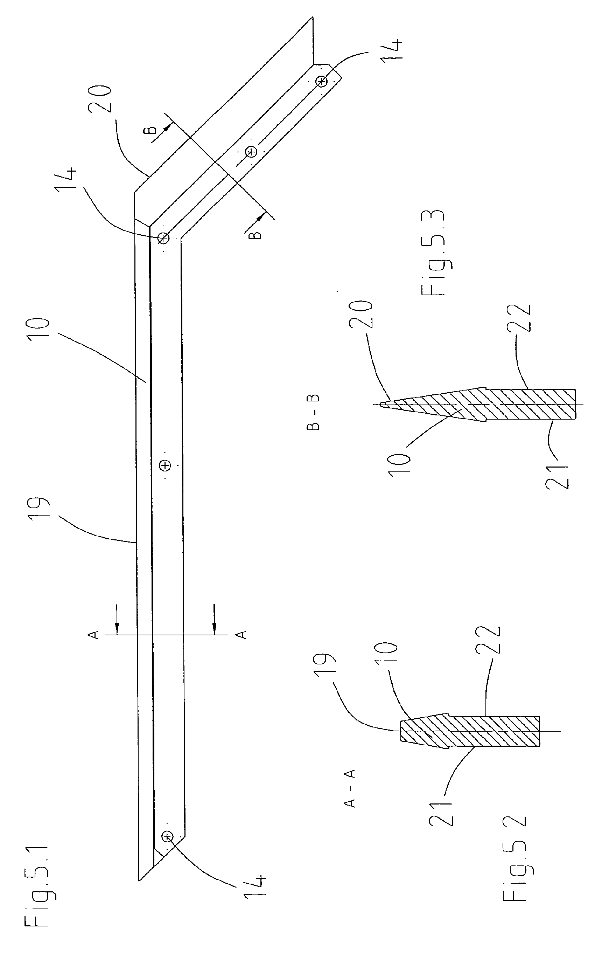

Der Figurensequenz der Figuren 5.1, 5.2 und 5.3 ist eine Ausführungsvariante der ersten Verschlussrippe 10 im Detail entnehmbar.

Figur 5.2 entspricht dem in Figur 5.1 dargestellten Schnittverlauf A-A, während in der Darstellung gemäß Figur 5.3 der in Figur 5.1 eingetragene Schnittverlauf B-B wiedergegeben ist.

Die erste Verschlussrippe 10 umfasst einen langen Schenkel und einen kurzen Schenkel, die in Bezug auf einander um etwa 135° geneigt ausgeführt sein können. Die erste Verschlussrippe 10 weist darüber hinaus einen stumpfen Rückenteil 19 sowie ein spitzes Rückenteil 20 auf sowie mehrere Befestigungsöffnungen 14, mit welchen das Wärmetauscher-Modul 1 über Schrauben, Bolzen oder drgl. zusammengehalten wird.

Gemäß dem Schnittverlauf in Figur 5.2 sind an den Seitenflächen der ersten Verschlussrippe 10 eine erste Anlagefläche 21 sowie eine zweite Anlagefläche 22 ausgebildet. Die Tiefe dieser Anlageflächen 21, 22 entspricht vorzugsweise der Materialstärke, der an den ersten Verschlussrippen 10 anliegenden Trennwände 6.1, 6.2, welche einerseits die Abluftkanäle und die Frischluftkanäle voneinander trennen und andererseits den erwünschten Wärmeübergang herbeiführen. Zur Vermeidung von Induzierung turbulenter Strömungen in den Kanälen, sind die Trennwände 6.1 bzw. 6.2 in die in Figur 5.2 bzw. 5.3 ausgebildeten Anlageflächen 21 bzw. 22 eingelassen. Während im Bereich des langen Schenkels der Rücken der ersten Verschlussrippe 10 als stumpfer Rücken 19 ausgebildet ist, ist im Bereich des kurzen Schenkels der ersten Verschlussrippe ein spitzer Rücken 20 ausgebildet. An den stumpfen Rücken 19 sind die Anlageflächen 32 für die Dichtflächen 31 ausgebildet.

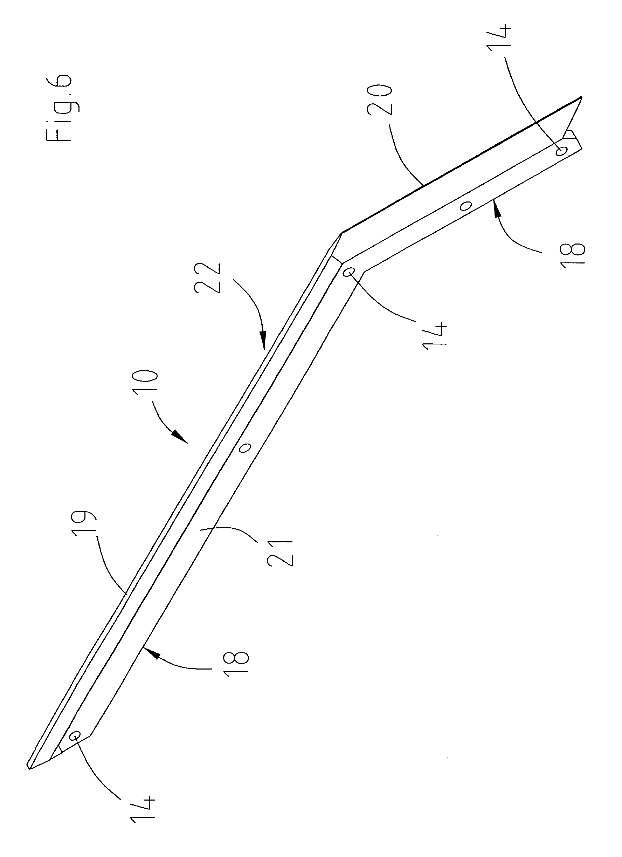

Der Darstellung gemäß Figur 6 ist in perspektivischer Ansicht die erste Verschlussrippe 10 zu entnehmen. Die erste Verschlussrippe 10 weist einerseits im Bereich ihres Längsschenkels einen stumpfen Rücken 19 auf, der im Bereich ihres kurzen Schenkels in einen spitzen Rücken 20 übergeht. Auf der den Rückenflächen 19 bzw. 20 gegenüberliegenden Seite ist an der ersten Verschlussrippe 10 eine Schließfläche 18 ausgebildet, mit welcher der jeweils zu verschließende Kanal, sei es ein Frischluftkanal, sei es ein Abluftkanal des Wärmetauscher-Moduls 1, abgedichtet wird. Ebenso wie die Trennwände 6.1, 6.2, mit welchen die Frischluft- und die Abluftkanäle voneinander getrennt sind, ist die erste Verschlussrippe 10 mit Öffnungen 14 versehen, durch welche das Wärmetauscher-Modul 1 fixierende stiftförmig oder schraubenförmig ausgebildete Befestigungselemente hindurchgesteckt werden können. An der ersten Verschlussrippe 10 sind ferner Anlageflächen 21 bzw. 22 ausgebildet, in welche die in Figur 6 nicht näher dargestellten Trennwände 6.1, 6.2, mit denen die Abluftkanäle bzw. die Frischluftkanäle voneinander getrennt sind, eingelassen werden können.

Figur 7 zeigt eine Draufsicht auf ein erfindungsgemäßes Wärmetauscher-Modul 1. Aus der Draufsicht gemäß Figur 7 geht hervor, dass das Wärmetauscher-Modul 1 durch eine erste Seitenwand 23 sowie eine zweite Seitenwand 24 begrenzt wird. Entsprechend der gewünschten Wärmerückgewinnung oder des zur Verfügung stehenden Einbauraumes können nebeneinander liegend am Wärmetauscher-Modul 1 eine beliebige Anzahl von Abluftkanälen 28 und Frischluftkanälen 29 ausgebildet werden. Im Extremfall, kann das Wärmetauscher-Modul 1 lediglich nur einen Abluftkanal 28 sowie lediglich einen Frischluftkanal 29, die voneinander durch die Trennwand 6.1 getrennt sind, aufweisen. Entsprechend der Länge der Befestigungselemente, deren Achsen 25 in Figur 7 angedeutet sind, können eine Vielzahl von Paaren von Abluftkanälen 28 bzw. Frischluftkanälen 29, jeweils durch Trennwände 6.1, 6.2 .... bis 6.n voneinander getrennt sind, nebeneinander liegend angeordnet werden. Aus der Darstellung gemäß Figur 7 geht hervor, dass die Abluftströmung 26 in den Abluftkanal 28 über die Eintrittsöffnung 2 einströmt. Die Abluftströmung 26 verlässt den Abluftkanal 28 an der Unterseite über die in Figur 1 dargestellten Austrittsöffnungen. Dabei hat sich die Abluftströmung 26 von ihrer Eintrittstemperatur ϑ₁ auf ihre Austrittstemperatur ϑ₂ abgekühlt. Der in Figur 7 dargestellte Abluftkanal 28 ist an seiner Oberseite durch den stumpfen Rückenteil 19 der ersten Verschlussrippe 10 verschlossen und an der Seite durch den spitzen Rückenteil 20 der ersten Verschlussrippe 10. Neben dem in Figur 7 dargestellten Abluftkanal 28 befindet sich ein Frischluftkanal 29. Aus diesem tritt über die Austrittsöffnung 5 an der Oberseite des Wärmetauscher-Moduls 1 sowie im Bereich der Seite des Wärmetauscher-Moduls 1 die Frischluftströmung 27 aus, die von ihrer Eintrittstemperatur ϑ₃ auf ihre Austrittstemperatur ϑ₄ erwärmt wurde. Der Wärmeübergang zwischen dem Abluftkanal 28 und dem Frischluftkanal 29 erfolgt über die zwischen den beiden Kanälen 28, 29 liegende Trennwand 6.1. Entsprechend des gewünschten modularen Aufbaus des Wärmetauscher-Moduls 1 können eine Vielzahl von Paaren von nebeneinander liegenden Abluftkanälen 28 und Frischluftkanälen 29 im Wärmetauscher-Modul 1 angeordnet werden. Dies hängt einerseits vom Grad der gewünschten Wärmerückgewinnung und andererseits vom zur Verfügung stehenden Einbauraum ab.

Vorzugsweise werden die Abluftströmung 26 und Frischluftströmung 27 über Sauggebläse, die dem Wärmetauscher-Modul 1 zugeordnet sind, angesaugt und treten in die Kanäle 28 bzw. 29 ein. Durch diese zwangsweise erzeugte Abluftströmung 26 bzw. Frischluftströmung 27 durch die Kanäle 28, 29 des Wärmetauscher-Moduls 1, stellt sich ein ausgezeichneter thermischer Wirkungsgrad ηₜₕ des vorgeschlagenen, nach dem Kreuzgegenstromprinzip arbeitenden Wärmetauscher-Moduls 1 ein. Aus der Draufsicht gemäß Figur 7 geht hervor, dass die Eintrittsöffnungen 2 der Abluftkanäle 28 und die Austrittsöffnungen 5 der Frischluftkanäle 29 jeweils alternierend in Bezug auf das Wärmetauscher-Modul 1 angeordnet sind. Wenn auch in Figur 7 nicht dargestellt, befindet sich unterhalb des Wärmetauscher-Moduls 1 die in Figur 1 angedeutete Kondensatauffangvorrichtung 7, in der das aus der Abluftströmung 26 auskondensierende Kondensat aufgefangen wird, welches weitestgehend vollständig durch die erwärmte Frischluftströmung 27 aus der Kondensatauffangvorrichtung 7 wieder abgeführt wird. Durch die Abkühlung der Abluftströmung 26 in Tropfrichtung 30 abtropfendes Kondensat wird vom Auslegematerial 8 aufgenommen, zieht in diesem zum trockensten Bereich, d.h. an die Oberfläche des Auslegemateriales 8, wird dort durch die Frischluftströmung 27 unter Vermeidung einer Luftmischung wieder abgenommen, so dass ein Feuchtekreislauf gewährleistet wird.

## Patentansprüche

1. Wärmetauscher-Modul (1) zur Rückgewinnung von Wärme aus einer Abluftströmung (26) und Übertragung der Wärme an eine Frischluftströmung (27), wobei dem Wärmetauscher-Modul (1) eine Kondensatauffangvorrichtung (7) zugeordnet ist, über welches bei der Abkühlung der Abluftströmung (26) entstehendes Kondensat aufgefangen wird, **dadurch gekennzeichnet, dass** das Wärmetauscher-Modul (1) mindestens ein paar benachbarter Abluftkanäle (28) und Frischluftkanäle (29) aufweist, die voneinander durch mindestens eine Trennwand (6.1, 6.2, ....6.n) getrennt sind, wobei die Paare von Abluftkanälen (28) und Frischluftkanälen (29) von der Abluftströmung (26) und der Frischluftströmung (27) gemäß des Kreuzgegenstromprinzipes zwangsweise durchströmt sind.

2. Wärmetauscher-Modul (1) gemäß Anspruch 1, **dadurch gekennzeichnet, dass** ein Abluftkanal (28) jeweils durch eine erste Verschlussrippe (10) und eine zweite Verschlussrippe (11) begrenzt ist und die erste Verschlussrippe (10) und die zweite Verschlussrippe (11) sowohl die Eintrittsöffnung (2) als auch die Austrittsöffnung (3) für die Abluftströmung (26) begrenzen.

3. Wärmetauscher-Modul (1) gemäß Anspruch 1, **dadurch gekennzeichnet, dass** der Frischluftkanal (29) durch eine erste Verschlussrippe (10) und eine zweite Verschlussrippe (11) abgedichtet ist und die erste Verschlussrippe (10) und die zweite Verschlussrippe (11) eine Eintrittsöffnung (4) und Austrittsöffnung (5) für die Frischluftströmung (27) begrenzen.

4. Wärmetauscher-Modul (1) gemäß Anspruch 1, **dadurch gekennzeichnet, dass** jeweils ein Abluftkanal (28) und ein Frischluftkanal (29) durch eine dünnwandige Trennwand (6.1, 6.2, ...6.n) getrennt sind, die aus Aluminium, Kupfer, Keramik oder aus einem gute Wärmeübertragungseigenschaften aufweisenden Kunststoffmaterial gefertigt ist.

5. Wärmetauscher-Modul (1) gemäß Anspruch 1, **dadurch gekennzeichnet, dass** die die Abluftkanäle (28) und die Frischluftkanäle (29) voneinander trennenden Trennwände (6.1, 6.2, ...6.n) Verrippungen aufweisen, welche eine Relativbewegung der Trennwände (6.1, 6.2, ...6.n) relativ zu den Abluftkanälen (28) und/oder Frischluftkanälen (29) verhindern.

6. Wärmetauscher-Modul (1) gemäß Anspruch 1, **dadurch gekennzeichnet, dass** unterhalb des Wärmetauscher-Moduls (1) eine Kondensatauffangvorrichtung (7) angeordnet ist, die von der über die Austrittsöffnung (5) des Wärmetauscher-Moduls (1) austretende Frischluftströmung (27) überströmt wird.

7. Wärmetauscher-Modul (1) gemäß Anspruch 6, **dadurch gekennzeichnet, dass** zwischen der Kondensatauffangvorrichtung (7) und der Unterseite des Wärmetauschermoduls (1) Dichtleisten (31) angeordnet sind.

8. Wärmetauschermodul (1) gemäß Anspruch 7, **dadurch gekennzeichnet, dass** die Dichtleisten (31) an Rückenteilen (19) der ersten Verschlussrippen (10) anliegen.

9. Wärmetauschermodul (1) gemäß Anspruch 7, **dadurch gekennzeichnet, dass** die Dichtleisten (31) an Anlageflächen (32) an der Unterseite des Wärmetauschermoduls (1) anliegen.
